# EUROPÄISCHE PATENTANMELDUNG

(11) **EP 3 705 962 A1**
(43) Veröffentlichungstag der Anmeldung: **09.09.2020**
(21) Anmeldenummer: 19161325.6
(22) Anmeldetag: 07.03.2019
(51) Int. Cl.: G05B 19/418

(54) **VERFAHREN UND SYSTEM ZUR QUALITÄTSKONTROLLE IN DER INDUSTRIELLEN FERTIGUNG**

(71) Anmelder: Siemens Aktiengesellschaft, 80333 München (DE)
(72) Erfinder: Krompaß, Denis, 81549 München (DE); Frikha, Ahmed, 81369 München (DE); Köpken, Hans-Georg, 91056 Erlangen (DE)

(57) **Zusammenfassung**

Die Erfindung bezieht sich auf ein Verfahren zur Qualitätskontrolle in der industriellen Fertigung für einen oder mehrere Produktionsprozess(e) zur Herstellung zumindest eines Werkstücks und/oder Produkts, umfassend:
- Erstellen (S10) eines Lernmodells (100) für zumindest einen Produktionsprozess des Werkstücks und/oder Produkts;
- Tainieren und Initialisieren (S20) des Lernmodells (100) mit einem Meta-Lernalgorithmus (200);
- Kalibrieren (S30) des Lernmodells (100) mit normierten Daten des zumindest einen Produktionsprozesses für das zumindest eine Werkstück und/oder Produkt;
- Weitergeben (S40) von aktuell erzeugten Daten des zumindest einen Produktionsprozesses für zumindest ein aktuell hergestelltes Werkstück/Produkt an das Lernmodell (100), wobei die Daten von Sensoren erzeugt werden;
- das Lernmodell (100) vergleicht (S50) die aktuell erzeugten Daten mit den normierten Daten und stellt Abweichungen fest;
- das Lernmodell (100) skaliert (S60) die Abweichungen zwischen den aktuell erzeugten Daten und den normierten Daten; und
- das Lernmodell (S70) teilt das Vorhandensein einer Anomalie bei dem aktuell erzeugten Werkstück/Produkt mit.

## Beschreibung

Die Erfindung betrifft ein Verfahren und System zur Qualitätskontrolle in der industriellen Fertigung für einen oder mehrere Produktionsprozesse zur Herstellung zumindest eines Werkstücks und/oder Produkts.

Die Überwachung der Qualität einer laufenden Produktion, um Kunden eine stabile Produktqualität zu liefern und zu gewährleisten, ist entscheidend für den Erfolg eines jedes Herstellers. Mängel in der Qualitätskontrolle sind daher nicht nur kostspielig, sie können auch den Ruf eines Herstellers nachhaltig beschädigen. Insbesondere in der Massenproduktion ist es jedoch nahezu unmöglich, für jedes an den Kunden gelieferte Produkt eine umfassende Qualitätskontrolle durchzuführen.

Daher wird häufig eine Qualitätskontrolle auf zwei Ebenen durchgeführt. Auf der ersten Ebene wird eine eher oberflächliche Qualitätskontrolle oft vom Maschinenoperateur selbst vorgenommen, um die gesamte Produktionsserie abzudecken, allerdings mit mangelhafter Genauigkeit. Auf der zweiten Ebene wird eine eingehende Qualitätskontrolle durch ausgebildetes Personal durchgeführt, um eine hohe Genauigkeit zu erzielen, allerdings nur für auswählte Einzelstücke einer Produktionsserie. Die Anzahl der untersuchten Einzelstücke und der Zeitpunkt einer Kontrolle beruhen häufig auf Erfahrungswerten für ein Produkt, den eingesetzten Maschinen und dem verwendeten Material. Obwohl dieser Ansatz seit Jahrzehnten eine bewährte Praxis darstellt, weist er Defizite auf, insbesondere, da aus der Kontrolle auf der zweiten Ebene nur ein Wissen und ein Erfahrungsschatz über die kleine Auswahl der kontrollierten Einzelstücke entstehen. Allerdings wird davon ausgegangen, dass die an der Auswahl von Einzelstücken festgestellten Mängel sich in der gesamten Produktionsserie seit der letzten durchgeführten Qualitätskontrolle wiederfinden. Bei der Feststellung von Mängeln an einer Auswahl von Einzelstücken werden daher entweder alle Einzelstücke einer Produktionsserie untersucht oder, was häufig kostengünstiger ist, die gesamte Produktionsserie als Ausschuss entsorgt.

Des Weiteren findet eine eingehende Qualitätskontrolle auf der zweiten Ebene häufig erst nach Kundenreklamationen statt und ist damit reaktiv. Zudem beruht das derzeitige System der Qualitätskontrolle auf der Annahme, dass festgestellte Mängel bei einem Einzelstück, das in einer Massenproduktionsanlage hergestellt wurde, für die gesamte Serie einer Produktion gelten und nicht nur bei dem Einzelstück auftreten. Darüber hinaus weist auch die Qualitätskontrolle selbst keine einheitliche Qualität auf, da sie häufig von dem Ausbildungsstand und der Tagesform des eingesetzten Personals abhängt.

Moderne Werkzeugmaschinen sind mit einer Vielzahl von Sensoren ausgestattet, die den Maschinen- und Bearbeitungszustand während der Produktion überwachen. Außerdem gibt es einen zunehmenden Trend, gemessene Daten zu speichern und zu verarbeiten, um durch eine eingehende Datenanalyse neue Optimierungsmöglichkeiten und ein tieferes Verständnis der zugrundeliegenden Verfahrensschritte zu entwickeln. Gut ausgebildete Experten sind durch ihr vertieftes Verständnis einer jeweiligen Domäne und der dort ablaufenden Prozesse und mittels neuer Softwarewerkzeuge in der Lage, Details im Produktionsprozess eines Produkts und/oder Werkstücks zu erkennen, wie dies bisher nicht möglich war. Bezogen auf die Qualitätskontrolle können diese Experten mittels der Daten und detaillierter Einblicke in die Mechanismen der Produktionsprozesse passgenaue softwaregesteuerte Lösungen entwickeln, die Mängel an den einzelnen Werkstücken nahezu in Echtzeit erkennen und/oder den jeweiligen Einzelprozess und/oder Gesamtprozess optimieren. Allerdings sind derart maßgeschneiderte Softwarelösungen oft sehr aufwändig und daher kosten- und zeitintensiv und benötigen häufig den Einsatz von optischen Sensoren, die häufig eher hochpreisig sind. Andererseits besteht ein hoher Bedarf, die Qualitätskontrolle in Produktionsanlagen durch Automatisierungstechniken zu verbessern.

Eine skalierbare, automatisierte Mängelerkennung während der Herstellung/Fertigung eines Werkstücks und/oder Produkts ist der erste Schritt hin zu einer vollautomatischen, datengesteuerten Qualitätskontrolle in Fabriken und Produktionsanlagen. Häufig ist es jedoch nicht möglich, genügend Daten zu sammeln, die die gesamte Vielfalt der Bearbeitungsprozesse zur Herstellung von Werkstücken und Produkten abbilden, da sich die gesammelten Daten nur sehr spezifisch auf den jeweiligen Fertigungsstandort, den verwendeten Maschinentyp und die jeweilige NC-Steuerung beziehen. Ein Lösungsansatz besteht darin, für jedes mögliche Szenario maßgeschneiderte IT-Lösungen zu entwickeln, die das Sammeln und Kennzeichnen der Daten für jeden Prozessschritt sowie eine Testphase und eine Fehlerphase umfassen, bis die entwickelten IT-Lösungen zufriedenstellende Ergebnisse liefern. Eine solche Vorgehensweise ist jedoch sehr zeitaufwändig und kostenintensiv. Darüber hinaus kann davon ausgegangen werden, dass ein ausgereifter Fertigungsprozess eine große Menge von Werkstücken in ausreichender Qualität bereitstellt und fehlerhafte Werkstücke eher die Ausnahme bilden.

Die der Erfindung zu Grunde liegende Aufgabe besteht nun darin, ein Verfahren und ein System zur Qualitätskontrolle insbesondere in der industriellen Fertigung und Produktion für einen oder mehrere Produktionsprozesse zur Herstellung zumindest eines Werkstücke und/oder Produkts anzugeben, das sich durch eine hohe Zuverlässigkeit und Sicherheit auszeichnet und zudem kostengünstig in der Implementierungsphase und während des Fertigungsbetriebs ist.

Diese Aufgabe wird hinsichtlich eines Verfahrens durch die Merkmale des Patentanspruchs eins, und hinsichtlich eines Systems durch die Merkmale des Patentanspruchs acht erfindungsgemäß gelöst. Die weiteren Ansprüche betreffen bevorzugte Ausgestaltung der Erfindung.

Die Erfindung betrifft gemäß einem ersten Aspekt ein Verfahren zur Qualitätskontrolle in der industriellen Fertigung für einen oder mehrere Produktionsprozess(e) eines Werkstücks und/oder Produkts, umfassend:
- Erstellen eines Lernmodells für zumindest einen Produktionsprozess des Werkstücks und/oder Produkts;
- Trainieren und Initialisieren des Lernmodells mit einem Meta-Lernalgorithmus;
- Kalibrieren des Lernmodells mit normierten Daten des zumindest einen Produktionsprozesses für das zumindest eine Werkstück und/oder Produkt;
- Weitergeben von aktuell erzeugten Daten des zumindest einen Produktionsprozesses für zumindest ein aktuell hergestelltes Werkstück/Produkt an das Lernmodell, wobei die Daten von Sensoren erzeugt werden;
- das Lernmodell vergleicht die aktuell erzeugten Daten mit den normierten Daten und stellt Abweichungen fest;
- das Lernmodell skaliert die Abweichungen zwischen den aktuell erzeugten Daten und den normierten Daten; und
- das Lernmodell teilt das Vorhandensein einer Anomalie bei dem aktuell erzeugten Werkstück/Produkt mit.

In einer vorteilhaften Weiterentwicklung ist das Lernmodell als tiefgehendes ("deep") neuronales Netzwerk ausgebildet, da für das Erkennen von fehlerhaften Werkstücken nur ein geringes systematisches Lösungswissen vorliegt und ein tiefgehendes neuronales Netzwerk mit mehreren Schichten dafür eignet ist, eine große Menge von teils unpräzisen Eingabeinformationen zu einem konkreten Ergebnis zu verarbeiten.

Vorteilhaftweise ist der Meta-Lernalgorithmus als ein agnostischer Meta-Lernalgorithmus ausgebildet, der das Lernmodell mittels eines Gradientenverfahrens trainiert.

In einer weiteren Ausgestaltung wird ein normierter Mittelwert einer festgelegten Messgröße bei einem Werkstück und/oder Produkt und/oder Produktionsprozess als Basis für die Berechnung einer Abweichung definiert.

Vorteilhafterweise weisen die aktuell generierten Daten eine Datenkennung (Label) auf. Somit können die aktuelle generierten Daten vorteilhaft zum überwachten Trainieren (engl. "supervised training") eines Lernmodells verwendet werden.

In einer weiteren Ausgestaltung verwenden die Sensoren nicht-optische Verfahren zur Datenerzeugung.

Vorteilhafterweise wird eine Anomalie festgestellt, wenn die Abweichung einen festgelegten Grenzwert über- oder unterschreitet.

Die Erfindung betrifft gemäß einem zweiten Aspekt ein System zur Qualitätskontrolle in der industriellen Fertigung für einen oder mehrere Produktionsprozess(e)zur Herstellung zumindest eines Werkstücks und/oder Produkts, umfassend ein Lernmodell für zumindest einen Produktionsprozess des Werkstücks und/oder Produkts. Das Lernmodell ist ausgebildet, von einem Meta-Lernalgorithmus trainiert und initialisiert zu werden, und das Lernmodel ist ausgebildet, mit normierten Daten des zumindest einen Produktionsprozesses für das zumindest eine Werkstück und/oder Produkt kalibriert zu werden. Ein oder mehrere Sensoren sind ausgebildet, aktuelle Daten eines Produktionsprozesses für ein aktuell hergestelltes Werkstück zu erzeugen und an das Lernmodell weiterzugeben, wobei das Lernmodell ausgebildet ist, die aktuell erzeugten Daten mit den normierten Daten zu vergleichen, Abweichungen festzustellen und die Abweichungen zwischen den aktuell erzeugten Daten und den normierten Daten zu skalieren, und wobei das Lernmodell ausgebildet ist, das Vorhandensein einer Anomalie bei dem aktuell erzeugten Werkstück/Produkt mitzuteilen.

In einer vorteilhaften Weiterentwicklung ist das Lernmodell als tiefgehendes neuronales Netzwerk ausgebildet.

Vorteilhafterweise ist der Meta-Lernalgorithmus als ein agnostischer Meta-Lernalgorithmus ausgebildet, der das Lernmodell mittels eines Gradientenverfahrens trainiert.

In einer vorteilhaften Ausgestaltung ist ein normierter Mittelwert einer festgelegten Messgröße bei einem Werkstück und/oder Produkt und/oder Produktionsprozess als Basis für die Berechnung einer Abweichung definiert.

In einer weiteren Ausgestaltung weisen die aktuell generierten Daten eine Datenkennung (Label) auf.

Vorteilhafterweise verwenden die Sensoren nicht-optische Verfahren zur Datenerzeugung.

In einer weiteren Ausgestaltung wird eine Anomalie festgestellt, wenn die Abweichung einen festgelegten Grenzwert über- oder unterschreitet.

Die Erfindung betrifft gemäß einem dritten Aspekt ein Computerprogrammprodukt, das einen und/der mehrere ausführbare Computercodes enthält zur Ausführung des Verfahrens nach einem oder mehreren der Ansprüche 1 bis 7.

Nachfolgend wird die Erfindung anhand von in der Zeichnung dargestellten Ausführungsbeispielen näher erläutert.

Dabei zeigen:

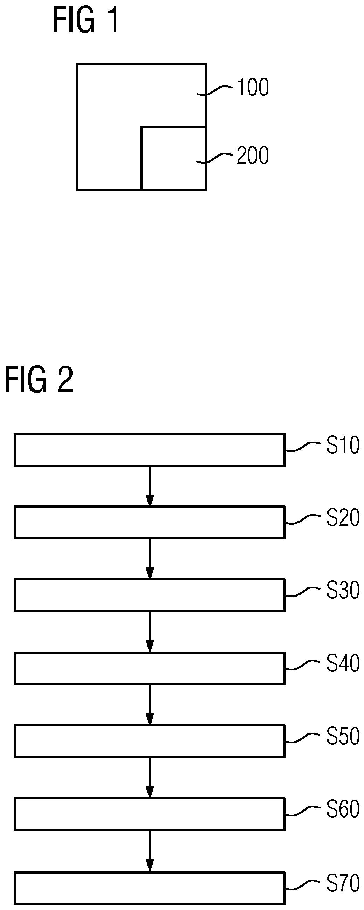

- Figur 1: ein Blockdiagramm zur Erläuterung eines Ausführungsdetails des erfindungsgemäßen Systems;
- Figur 2: ein Ablaufdiagramm zur Erläuterung eines Verfahrens gemäß der Erfindung; und
- Figur 3: eine schematische Darstellung eines Computerprogrammprodukt gemäß der Erfindung.

Zusätzliche Merkmale, Aspekte und Vorteile der Erfindung oder ihrer Ausführungsbeispiele werden durch die ausführliche Beschreibung in Verbindung mit den Ansprüchen ersichtlich.

Gemäß der vorliegenden Erfindung wird ein tiefgehendes neuronales Lernmodell (deep learning model) 100 verwendet, um Mängel an Werkstücken in einer Produktionsserie zu erkennen. Ein Beispiel für ein solches Lernmodell 100 stellt ein konvolutionales neuronales Netzwerk (engl. "convolutional neural network") dar. Ein tiefgehendes Lernmodell 100 bezeichnet eine Klasse von Optimierungsmethoden künstlicher neuronaler Netze, die mehrere Zwischenlagen (engl. "hidden layers") zwischen Eingabeschicht und Ausgabeschicht haben und dadurch eine umfangreiche innere Struktur aufweisen. Ein solches Lernmodell 100 ist für die schnelle Anpassung an eine neue Zielaufgabe optimiert, auch wenn nur wenige Eingangsdaten aus einem normalen Herstellungs- und/oder Bearbeitungsprozess zur Verfügung stehen Das Lernmodell kann mittels Frameworks wie beispielsweise TensorFlow oder PyTorch programmiert werden.

Für das Trainieren und Kalibrieren des Lernmodells 100 wird gemäß der Erfindung ein agnostischer Meta-Lern-Algorithmus 200 verwendet, wie er beispielsweise von Chelsea Finn et al. (Chelsea Finn, Pieter Abbeel, Sergey Levine: Model-Agnostic Meta-Learning for Fast Adaption of Deep Networks, 18 July 2017) beschrieben wurde. Der agnostische Meta-Lernalgorithmus 200 ist in der Lage, das Lernmodell 100 mittels eines Gradientenverfahrens zu trainieren, um eine Initialisierung des parametrisierten tiefgehenden Lernmodells 100 durchzuführen.

Im Folgenden werden die Datenaufbereitung, das Modelltraining und die Modellanwendung für einen Anwendungsfall näher beschrieben. Die Erkennung von Anomalien und/oder Fehlern während der Herstellung und/oder Bearbeitung von Werkstücken und/oder anderen Produkten basiert ausschließlich auf Sensorsignaldaten, die von Datenerfassungsgeräten und Sensoren in einer Produktionsanlage generiert werden.

Durch das Trainieren mittels des agnostischen Meta-Lernalgorithmus 200 ist das tiefgehende Lernmodell 100 in der Lage, sich nach der Trainingsphase an einen neuen Fertigungsprozess anzupassen und dabei nur Daten von Werkstücken, die eine hinreichend gute Qualität aufweisen, zu verwenden. Im Idealfall erreicht das Lernmodell 100 die erforderliche Anpassung an einen neuen Fertigungsprozessablauf bereits durch die Daten, die bei den Testläufen während der Kalibrierungsphase generiert wurden.

Gemäß der vorliegenden Erfindung wird das Lernmodell 100 nur auf Basis von Daten über Normalzustände eines Werkstücks und/oder Produkts (Normalzustandsdaten) und im Rahmen der Bearbeitung von vorzugsweise nicht visuellen Sensordaten mit dem Zweck der Anomalie-Erkennung in Fertigungsprozessen kalibriert.

Im Folgenden wird die Datenaufbereitung für das Training des Lernmodells 100 näher erläutert. Um das Lernmodell 100 zu trainieren, ist eine ausreichende Anzahl von Sensoren in einer Fertigungsanlage notwendig. Beispielswiese können diese Sensoren die Drehmomente der verschiedenen Achsen bei einer Fräsmaschine messen und Abweichungen steuern. Außerdem sind Daten von einer ausreichenden Anzahl an Werkstücken und Bearbeitungsprozessen erforderlich. Darüber hinaus sollte eine Datenkennung (Label) vorgesehen sein, die die Daten, die auf Anomalien hinweisen, entsprechend markieren.

Vorzugsweise nimmt ein Experte die Kennzeichnung der Daten mit Datenkennungen (Labeling) mit einem entsprechenden Hinweis vor. Als Beispiel seien Drehmomentmessungen einer Frässpindel genannt. Es werden beispielsweise die Regelabweichungen der Z-Achse von 100 Werkstücken und bei 8 verschiedenen Verarbeitungsprozessen untersucht. Die Verarbeitungsprozesse umfassen verschiedene Grobbearbeitungsprozesse, beispielsweise das Einschneiden einer Tasche in das Werkstück, und Veredelungsprozesse wie das Glätten der oberen Oberfläche des Werkstücks.

Als Vorverarbeitungsschritt des erfindungsgemäßen Verfahrens werden die verschiedenen Datensignale, die bei jedem Prozessschritt generiert werden, gemäß ihrer Abweichung von einem festgelegten Normwert auf einer Skala erfasst und damit skaliert. Bei einigen Datensignalen kann es auch sinnvoll sein, den Datenwert des Datensignals der repräsentativen Daten für die normale Bearbeitung (Normbearbeitung) von den neu generierte Datensignalen zu subtrahieren, um die Abweichung deutlicher erfassen zu können. Dies ist insbesondere sinnvoll, wenn der Wert der Abweichung im Vergleich zum Wert des Datensignals klein ist. Es werden somit die Abweichungen von einem normierten Mittelwert einer festgelegten Messgröße bei einem Werkstück und/oder Produkt erfasst.

Das Lernmodell 100 wird mittels des agnostischen Meta-Lernalgorithmus 200 trainiert. Der Algorithmus 200 zum Trainieren des Modells kann wie folgt als Pseudocode dargestellt werden:
1. Vorbereiten der Daten.
2. Zufälliges Initialisieren der Lernmodellparameter θ.
3. **solange** nicht konvergierend
4. Entnehmen einer Menge von n Prozessen Pᵢ ∼ p (P)
5. **Für** jeden Pᵢ ist **auszuführen:**
6. Entnehmen von k Trainingsbeispielen für das normale Bearbeitungsverhalten aus dem Prozess Pᵢ.
7. Bewerten der Leistungsfähigkeit der Anomalie-Erkennung des Lernmodells anhand dieser Beispiele.
8. Aktualisieren der Lernmodellparameter θ nach θ' unter Verwendung eines Gradientenverfahrens.
9. **Ende für**
10. Entnehme n x k Trainingsbeispiele für die Erkennung von Anomalien aus der entnommenen Menge von n Prozessen.
11. Aktualisieren der Lernmodellparameter θ bezüglich des Fehlers, der von dem mit θ' parametrisierten Modell aufgrund des Gradientenverfahrens entstanden ist.

### 12. Ende solange

In der Trainingsphase wird das Lernmodell 100 für den Anwendungsfall optimiert. Wird das Lernmodell 100 zum Erkennen von Anomalien bei einem neuen Werkstück und/oder bei einem neuen Bearbeitungsprozess eingesetzt, so wird erfindungsgemäß angenommen, dass während der Kalibrierungsphase der Maschine und des Prozesses genügend Daten bezogen auf die normale Bearbeitung erfasst wurden, beispielsweise durch die Anfertigung von Testwerkstücken. Erfindungsgemäß werden die Verfahrensschritte der inneren Trainingsschleife von dem Meta-Lernalgorithmus 200 verwendet, um die Lernmodellparameter 100 schnell an die neue Situation (d.h. neues Werkstück und/oder neuer Fertigungsprozess) anzupassen:
1. Vorverarbeiten der Kalibrierungsdaten.
2. Initialisieren des Lernmodells 100 mit den Parametern θ, die während des Lernmodelltrainings gefunden wurden.
3. Entnehmen von k Trainingsbeispielen für das normale Bearbeitungsverhaltens nach dem neuen Prozess Pi.
4. Aktualisieren der Lernmodellparameter θ auf θ' unter Verwendung desselben konfigurierten Gradientenverfahrens, das während des Trainings verwendet wurde.

Wenn das Lernmodell 100 in den Produktionsmodus wechselt, wird das kalibrierte Lernmodell 100 verwendet, um Anomalien bei den von den Sensoren aktuell erzeugten Daten (Live-Daten) für ein Werkstück und/oder Produkt bei einem bestimmten Produktionsprozess festzustellen:
1. Vorverarbeiten der aktuell erzeugten Daten.
2. Initialisieren des Lernmodells 100 mit den Parametern θ', die während der Modellkalibrierung gefunden wurden.
3. Vorhersagen von Anomalie-Wahrscheinlichkeiten für die aktuell erzeugten Daten mit dem Lernmodell 100.

Das Lernmodell 100 wird unter ähnlichen Bedingungen trainiert, die in einem realen Produktionsszenario auftreten würden. Vorteilhaftweise wird das Lernmodell 100 in einer Laborumgebung trainiert mit einer ausreichenden Menge an Daten mit einer Datenkennung von verschiedenen Bearbeitungsprozessen und/oder Fertigungsschritten wie beispielsweise der Verwendung von unterschiedlichen Maschinen. Durch den agnostischen Meta-Lernalgorithmus 200 ist es möglich, dass das Lernmodell 100 sich schnell an eine neue Produktionsumgebung und/oder Produktionsprozessen anpasst.

Vorteilhafterweise wird in jeder Trainingsiteration ein Prozessschritt und ein begrenzter Datensatz aus den normalen Fertigungs- und Bearbeitungsprozessen bei der Fertigung von Werkstücken verwendet, um das Lernmodell 100 zu kalibrieren. Das Lernmodell 100 ist daher in der Lage, aus Sensorsignaldaten, die während eines neuen Fertigungsprozesses generiert werden und die nicht während der Trainingsphase des Lernmodells 100 verwendet wurden, Anomalien bei einzelnen Werkstücken festzustellen. Beim Einsatz der Lernmodells 100 in der Fertigung werden dann Anomalien, die einen festgelegten Grenzwert unter- oder überschreiten, bei jedem einzelnen Werkstück, für das aktuelle Daten generiert werden, schnell und effiziert erkannt.

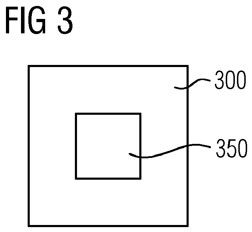

Fig. 3 zeigt ein Ablaufdiagramm eines erfindungsgemäßen Verfahrens zur Qualitätskontrolle in der industriellen Fertigung.

In einem Schritt S10 wird ein Lernmodell 100 für einen oder mehrere Produktionsprozess(e) zumindest eines Werkstücks und/oder Produkts erstellt.

In einem Schritt S20 wird das Lernmodell 100 mit einem Meta-Lernalgorithmus 200 trainiert und initialisiert.

In einem Schritt S30 wird das Lernmodell 100 mit normierten Daten zumindest eines Produktionsprozesses für das zumindest eine Werkstück und/oder Produkt kalibriert.

In einem Schritt S40 werden aktuell erzeugte Daten des zumindest einen Produktionsprozesses für zumindest ein aktuell hergestelltes Werkstück/Produkt an das Lernmodell (100) weitergegeben, wobei die Daten von Sensoren generiert werden.

In einem Schritt S50 vergleicht das Lernmodell 100 die aktuell erzeugten Daten mit den normierten Daten und stellt Abweichungen fest.

In einem Schritt S60 skaliert das Lernmodell die Abweichungen zwischen den aktuell erzeugten Daten und den normierten Daten.

In einem Schritt S70 teilt das Lernmodell das Vorhandensein einer Anomalie bei dem aktuell erzeugten Werkstück/Produkt mit.

Fig. 3 stellt schematisch ein Computerprogrammprodukt 300 dar, das einen und/der mehrere ausführbare Computercodes 350 enthält zur Ausführung des Verfahrens nach dem ersten Aspekt der Erfindung.

Die vorliegende Erfindung kann sehr kostengünstig eingesetzt werden, da der Kalibrierungsaufwand des Lernmodells 100 für einen neuen Fertigungsprozess gering ist und leicht umgesetzt werden kann. Darüber hinaus ermöglicht die vorliegende Erfindung eine geführte Qualitätskontrolle gegenüber einer geplanten Qualitätskontrolle in der industriellen Fertigung. Der Zeitraum, auf Mängel während einer laufenden Produktion zu reagieren, kann deutlich verkürzt und die Ausschussmenge von Produkten erheblich reduziert werden. Bei hohen Stückzahlen und in der Massenproduktion kann die vorliegende Erfindung vorteilhaft verwendet werden, da jedes Werkstück mit hochauflösenden Daten kontrolliert werden kann. Mit der vorliegenden Erfindung kann den Singularitäten, die jeder Produktionsprozess, jede Maschine und jeder Standort aufweist, begegnet werden.

## Patentansprüche

1. Verfahren zur Qualitätskontrolle in der industriellen Fertigung für einen oder mehrere Produktionsprozess (e) zur Herstellung zumindest eines Werkstücks und/oder Produkts, umfassend:
Erstellen (S10) eines Lernmodells (100) für zumindest einen Produktionsprozess des Werkstücks und/oder Produkts;
- Tainieren und Initialisieren (S20) des Lernmodells (100) mit einem Meta-Lernalgorithmus (200);
- Kalibrieren (S30) des Lernmodells (100) mit normierten Daten des zumindest einen Produktionsprozesses für das zumindest eine Werkstück und/oder Produkt;
- Weitergeben (S40) von aktuell erzeugten Daten des zumindest einen Produktionsprozesses für zumindest ein aktuell hergestelltes Werkstück/Produkt an das Lernmodell (100), wobei die Daten von Sensoren erzeugt werden;
- das Lernmodell (100) vergleicht (S50) die aktuell erzeugten Daten mit den normierten Daten und stellt Abweichungen fest;
- das Lernmodell (100) skaliert (S60) die Abweichungen zwischen den aktuell erzeugten Daten und den normierten Daten; und
- das Lernmodell (100) teilt das Vorhandensein einer Anomalie bei dem aktuell erzeugten Werkstück/Produkt mit (S70) .

2. Verfahren nach Anspruch 1, **dadurch gekennzeichnet, dass** das Lernmodell (100) als tiefgehendes neuronales Netzwerk ausgebildet ist.

3. Verfahren nach Anspruch 1 oder 2, **dadurch gekennzeichnet, dass** der Meta-Lernalgorithmus (200) ein agnostischer Meta-Lernalgorithmus ist, der das Lernmodell (100) mittels eines Gradientenverfahrens trainiert.

4. Verfahren nach einem der vorangehenden Ansprüche, **dadurch gekennzeichnet, dass** ein normierter Mittelwert einer festgelegten Messgröße bei einem Werkstück und/oder Produkt und/oder Produktionsprozess als Basis für die Berechnung einer Abweichung definiert wird.

5. Verfahren nach einem der vorangehenden Ansprüche, **dadurch gekennzeichnet, dass** die aktuell generierten Daten eine Datenkennung aufweisen.

6. Verfahren nach einem der vorangehenden Ansprüche, **dadurch gekennzeichnet, dass** die Sensoren nicht-optische Verfahren zur Datenerzeugung verwenden.

7. Verfahren nach einem der vorangehenden Ansprüche, **dadurch gekennzeichnet, dass** eine Anomalie festgestellt wird, wenn die Abweichung einen festgelegten Grenzwert über- oder unterschreitet.

8. System zur Qualitätskontrolle in der industriellen Fertigung für einen oder mehrere Produktionsprozess(e)zur Herstellung zumindest eines Werkstücks und/oder Produkts, umfassend:
ein Lernmodell (100) für zumindest einen Produktionsprozess des Werkstücks und/oder Produkts, wobei das Lernmodell (100) ausgebildet ist, von einem Meta-Lernalgorithmus (200) trainiert und initialisiert zu werden, und wobei das Lernmodel (100) ausgebildet ist, mit normierten Daten des zumindest einen Produktionsprozesses für das zumindest eine Werkstück und/oder Produkt kalibriert zu werden, und
ein oder mehrere Sensoren, die ausgebildet sind, aktuelle Daten eines Produktionsprozesses für ein aktuell hergestelltes Werkstück zu erzeugen und an das Lernmodell (100) weiterzugeben, wobei das Lernmodell (100) ausgebildet ist, die aktuell erzeugten Daten mit den normierten Daten zu vergleichen, Abweichungen festzustellen und die Abweichungen zwischen den aktuell erzeugten Daten und den normierten Daten zu skalieren, und wobei das Lernmodell (100) ausgebildet ist, das Vorhandensein einer Anomalie bei dem aktuell erzeugten Werkstück/Produkt mitzuteilen.

9. System nach Anspruch 8, **dadurch gekennzeichnet, dass** das Lernmodell (100) als tiefgehendes neuronales Netzwerk ausgebildet ist.

10. System nach Anspruch 8 oder 9 **dadurch gekennzeichnet, dass** der Meta-Lernalgorithmus (200) als ein agnostischer Meta-Lernalgorithmus ausgebildet ist, der das Lernmodell (100) mittels eines Gradientenverfahrens trainiert.

11. System nach einem der vorangehenden Ansprüche 8-10, **dadurch gekennzeichnet, dass** ein normierter Mittelwert einer festgelegten Messgröße bei einem Werkstück und/oder Produkt und/oder Produktionsprozess als Basis für die Berechnung einer Abweichung definiert ist.

12. System nach einem der vorangehenden Ansprüche 8-11, **dadurch gekennzeichnet, dass** die aktuell generierten Daten eine Datenkennung aufweisen.

13. System nach einem der vorangehenden Ansprüche 8-12, **dadurch gekennzeichnet, dass** die Sensoren ausgebildet sind, nicht-optische Verfahren zur Datenerzeugung zu verwenden.

14. System nach einem der vorangehenden Ansprüche 8-13, **dadurch gekennzeichnet, dass** eine Anomalie festgestellt wird, wenn die Abweichung einen festgelegten Grenzwert über- oder unterschreitet.

15. Ein Computerprogrammprodukt (300), das einen und/der mehrere ausführbare Computercodes (350) enthält zur Ausführung des Verfahrens nach einem oder mehreren der Ansprüche 1 bis 7.
